# EUROPEAN PATENT SPECIFICATION

(11) **EP 0 714 346 B1**
(45) Date of publication and mention of the grant of the patent: **14.10.1998**
(21) Application number: 93911518.4
(22) Date of filing: 29.04.1993
(51) Int. Cl.: B29C 53/78, B29C 65/40

(54) **A WELDING METHOD IN THE MANUFACTURE OF A SPIRALLY WOUND TUBE AND A WELDING HEAD FOR PERFORMING THE METHOD**
SCHWEISSVERFAHREN ZUR HERSTELLUNG VON SPIRALFORMIG GEWICKELTEN ROHREN UND SCHWEISSKOPF ZUR DURCHFÜHRUNG DIESES VERFAHRENS
PROCEDE DE SOUDAGE DANS LA FABRICATION D'UN TUBE ENROULE EN SPIRALE ET TETE DE SOUDAGE POUR METTRE EN OEUVRE CE PROCEDE

(30) Priority: 30.04.1992 FI 921967
(43) Date of publication of application: 05.06.1996
(73) Proprietor: OY KWH PIPE AB, 65101 Vasa (FI)
(72) Inventor: BLOMQVIST, Gunnar, SF-65520 Helsingby (FI)
(74) Representative: Eriksson, Svante Johan Christer
(86) International application number: PCT/FI93/00182
(87) International publication number: WO 93/22126

(56) References cited:
- EP-A- 0 060 482
- EP-A- 0 223 768
- EP-A- 0 418 760
- DE-A- 3 830 627

## Description

The present invention relates to a welding method in the manufacture of a spirally wound tube, as well as to a welding head for welding a thermoplastic hollow profile in manufacturing a spirally wound tube.

An extruder welded spirally wound tube of a plastics hollow profile is disclosed in the international publication WO 90/02285, but there is no teaching of the way of welding.

In DE, A1, 3 830 627 a method for manufacturing a tube is disclosed, which method comprises winding a hollow thermoplastic profile around an inner tube. Before winding the hollow profile is plasticised on an inner and both side surfaces and the inner tube is plasticised on its outer surface. A stream of additional thermoplastic material may be applied between the profile windings during the winding process. No welding tool is described.

EP, A2, 418 760 discloses a method of producing a spirally wound tube, where a multicellular hollow thermoplastic profil is wound upon a drum. The profile surfaces are welded by means of heat and axial pressure, No thermoplastic material is added.

Previously, welding of spirally wound tubes having a polyethylene hollow profile was performed in two steps. During a first rotation, which the hollow profile run around the welding drum, an inner seam was welded onto the closest previous rotation with a single welding keel and during the following rotation an outer seam was welded with a single extruder shoe.

A drawback in connection with this method used previously is that it requires two extruders as well as that the total welding operation is relatively difficult to supervise, partially depending on that the heating occurred by means of a fanned air heater, which was not integrated with the welding keel, but they had to be adjusted separately resulting in a very varying heating result, and partially resulting from great fluctuations in the welding pressure. This previously used welding method does not satisfy all the requirements for a good weld for a polyethylene, which especially concerns the outer seam.

A condition for a good weld seam in polyethylene is besides cleanliness that the basic material is heated to a correct temperature and that the surfaces to be seamed together are pressed together under pressure.

The purpose of this invention is to provide a double weld seam, which satisfies all requirements and is also simple and reliable to perform. This is achieved with a method according to claim 1 and an apparatus according to claim 7.

This welding method, which in a simple and reliable way provides a double weld seam, resembles a pure butt welding. The fact that makes the method so attractive is that the welding occurs in one operation from the outside with only one extruder and that it is easy to repeat.

The remaining characteristics of the invention are described in the enclosed claims 2 to 6 and 8 to 10.

The invention is next described in more detail with reference to the accompanying drawings, wherein:

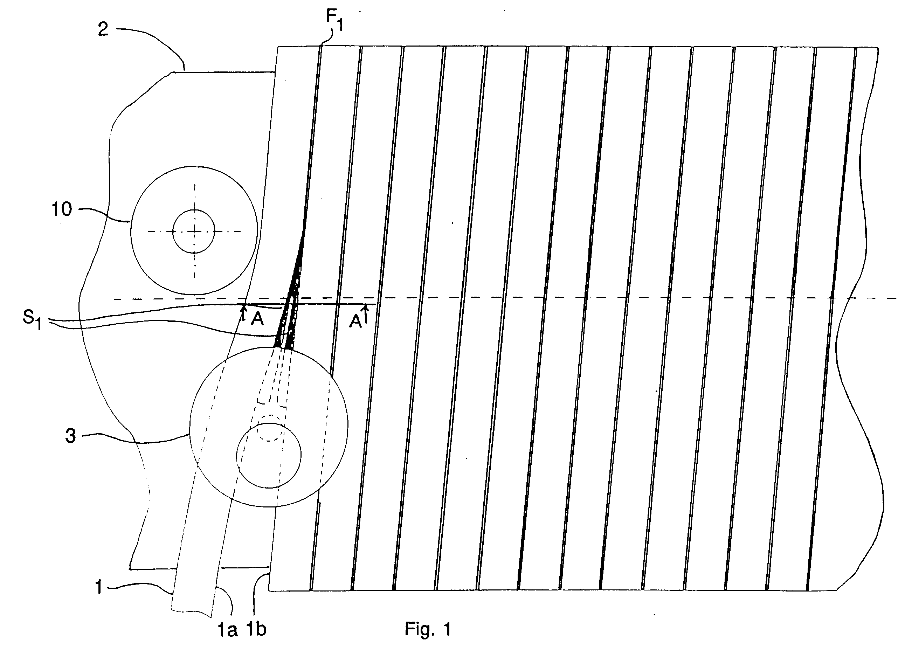

Fig. 1 shows a scheme in principle of the manufacture of a spirally wound tube;
Fig. 2 shows an enlarged section of a tube wall of Fig. 1 along the line A-A; and
Fig. 3 shows a scheme in principle of an inventive welding head during a welding operation, seen partially in section as well as a cross-section of the welding head and of a keel nose.

When manufacturing a spirally wound tube of a thermoplastics hollow profile 1 with a mainly rectangular cross-section, the hollow profile 1 is led to a rotatable welding drum 2, with a diameter corresponding to the inner diameter on the tube to be manufactured, whereby the hollow profile 1 is wound in a screw-line form around the welding drum 2. A welding head 3 with a welding keel 4 is inserted from the outside into the gap, which is formed between the hollow profile 1 entering the welding drum 2 and the hollow profile 1 wounded around the welding drum of the first full rotation. The welding head 3 is connected to an extruder (not shown), which is arranged to lead to the welding head 3 a welding mass S as well as to two hot-air sources (not shown). The welding keel 4 has a length, which mainly corresponds to the wall thickness of the completed tube, and has three main zones. Closest to the welding head 3 is located an upper welding zone 4a with a pair of slantingly forwards against the rotating direction of the welding drum 2 directed air openings 5, through which hot air L₁ is intended to be blown out against the upper portions of both profile surfaces 1a, 1b, which are to be welded together, and a pair of welding mass openings 6 on the rear edge of the welding keel 4 mainly on the same level as that of the pair of the air openings 5, and the welding mass S₁ extruded through these openings 6 is intended to be pressed out onto the portions preheated by the hot-air streams L₁ of the profile walls 1a and 1b. This welding mass S₁ is intended to form an outer weld seam F₁. The lowermost section of the welding keel 4 has a lower welding zone 4b, which is constructed in mainly the same way as the upper welding zone 4a with a pair of air openings 7 and a pair of welding mass openings 8, with which lower welding zone 4b an inner welding seam F₂ is intended to be formed. Between these two welding zones 4a and 4b, the welding keel 4 has a central shadowing zone 4c with a forwardly directed keel nose 9, which is intended to guide the air streams L₁ and L₂ from the two pairs of air openings 5, 7 and to prevent overheating of the central portions of the two profile walls 1a, 1b, which are to be welded together, by preventing the hot air streams L₁ and L₂ from coming into direct contact with these portions. In connection with a strong overheating of the middle portion of the hollow profiles, a too soft and unstable profile is in fact obtained. In connection with thin-walled profiles 1, the keel nose 9 acts simultaneously as a support for the profile walls. The opposite portions of the hollow profiles 1, which are coated with the welding mass S₁ and S₂, are pressed together by means of a press roller 10, whose axis is radially directed relative to the welding drum 2. The welding pressure achieved by the press roller 10 is maintained on a desired level by regulating the friction between the hollow profile 1 and the welding drum 2. According to the invention is thus obtained a spirally wound tube with a double weld seam in one operation.

For achieving an absolutely correct temperature in the outer and inner edge areas, respectively, of the profile walls 1a and 1b, the two pairs of air openings 5 and 7 are coupled to separate, individually adjustable air supply systems provided with their own hot air elements. The hot air stream L₁ to the upper pair of air openings 5 is led via a first air channel 11 and the hot air stream L₂ is led to the lower pair of air openings 7 via a second air channel 12. This arrangement makes possible an individual temperature regulation on the preheated portions of the hollow profile walls 1a and 1b by regulating the air temperature and the air stream for hot-air streams through respective air channels 11, 12. The air temperature may preferably be controlled by means of temperature controllers arranged in the inlet channels for hot air connected to the welding head 3, and an air stream may preferably be read from flow meters, which may be installed into a feeding line in the corresponding air supply system.

The quantity of the welding mass S to be fed to the welding head 3 is regulated with the extruder, while the balancing of the welding mass stream between the upper pair of the welding mass openings 6 and the lower pair of the welding mass openings 8 occurs by means of an adjusting screw 13 arranged on the welding head 3. The adjusting screw 13 may be e.g. arranged to throttle the welding mass flow S₁ up to the upper welding zone 4a about to a point, where the main channel 14 for the welding mass is divided into two partial channels 15 and 16, of which one partial channel 15 leads to the pair of welding mass openings 6 in the upper welding zone 4a and the second partial channel 16 to the pair of welding mass openings 8 in the lower welding zone 4b. The two partial channels 15 and 16 are branched immediately for a respective pair of welding mass openings 6, 8 such that as identical welding mass strings as possible are applied onto both hollow profile surfaces 1a and 1b. As an alternative to the case that only the shorter mass channel 15 is provided with a throttle valve, both mass channels 15 and 16 may be provided with a throttle valve.

The width on the welding mass strings 17, 18 to be applied to the preheated portions of the profile walls 1a and 1b are in the first place defined by the width of chamberings 19, 20, which are received around the respective welding mass openings 6, 8, but also the amount of the applied welding mass affects the width of the welding mass strings 17, 18.

For maintaining as optimal direction as possible on the outflowing hot-air streams L₁ and L₂, both pairs of air openings 5, 7 are preferably arranged in a plough-formed bevelled front portion 21, 22 of a corresponding welding zone 4a resp. 4b. Corresponding pairs of air openings 5, 7 may e.g. be achieved so that the mouth for the respective air channel 11 and 12 is divided into a pair of air openings by means of a vertical tranverse beam, having an inside preferably formed such that it contributes to the fact that it guides the corresponding hot-air streams L₁ and L₂, in a plough-formed manner.

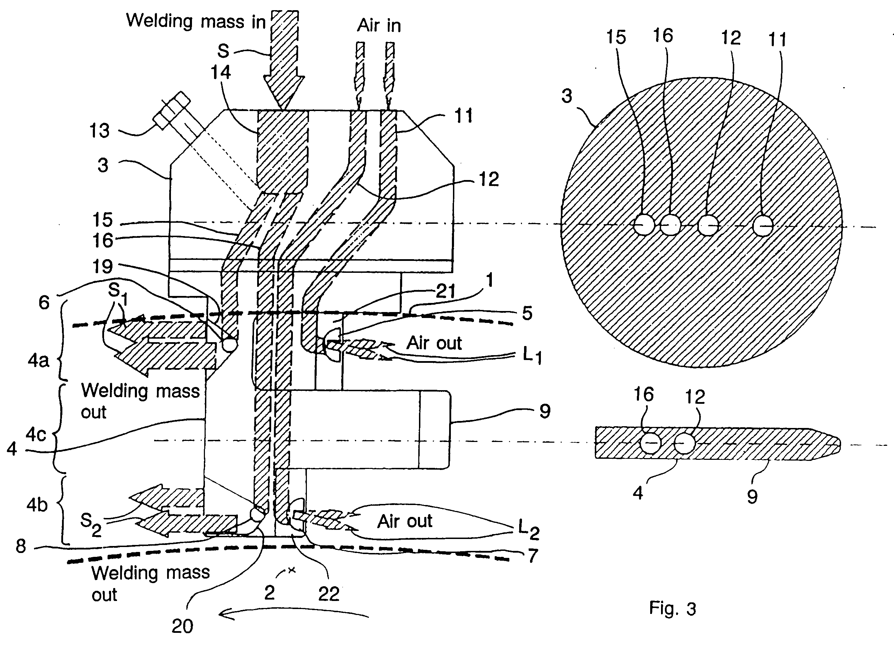

In connection with the keel nose 9 is arranged a welding keel 4 of a mainly uniform thickness, which closest to the front tip of the keel nose somewhat decreases, as is shown in the schematic cross-section of Fig. 3. The welding head 3 itself has, as is shown in the same way relative to Fig. 3, a mainly circular cross-section.

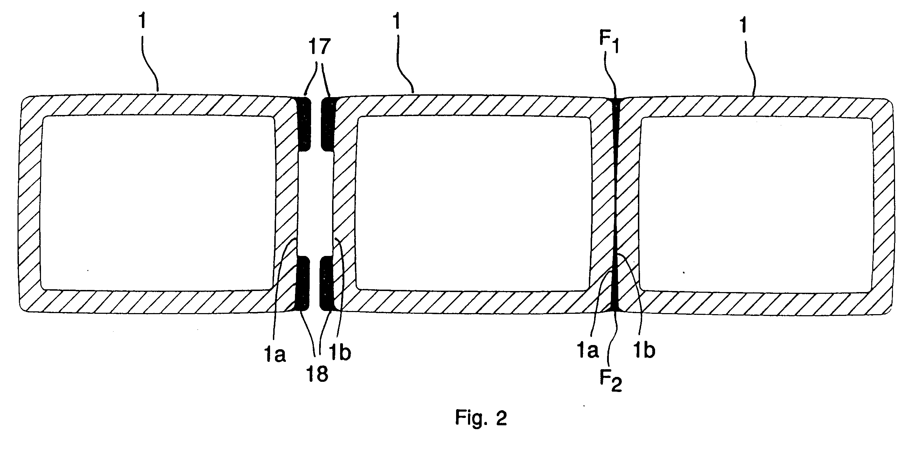

Fig. 2 shows on the left gap between the hollow profiles 1, how the welding mass strings 17, 18 have been applied along the preheated upper and lower edge portions of the two hollow profile surfaces 1a and 1b, which are to be seamed together, and in the right gap may be seen, how the final double weld seam may be formed, when the welding pressure is adjusted onto such a level that the welding mass S₁ and S₂ from the upper 17 and lower 18 welding mass strings fall together. The outer weld seam F₁ is preferably ground off by means of a teflon shoe (not shown), which is located against the outer surface of the welded profiles 1 immediately after compression with the press roller 10.

When the welding pressure is applied, the friction between the hollow profile 1 and the welding drum 2 may be regulated e.g. so that the welding drum 2 is cooled down, whereby the portions of the hollow profiles 1 located against the welding drum 2 shrink and result in a higher friction. Along with the fact that the welding pressure is regulated by varying the friction between the hollow profile 1 and the welding drum 2, according to the invention is used a longer welding drum 2 than in connection with previous welding methods. The friction between the welding drum 2 and the hollow profile 1 may also be adjusted totally mechanically by using a welding drum 2 having a variable diameter. The amount of the friction may also be affected by varying the application tension for the profile 1, when it is wound onto the welding drum 2.

The invention is applicable to hollow profiles of different thermoplastic materials, of which polyethylene and polypropene are the ones used most commonly.

An advantage in connection with the inventive welding method is the fact that the welding is performed in one operation with a minimum of equipment and under fully controlled conditions relative to the application of the welding mass, adjustment of the welding pressure and the preheating of the profile surfaces to be seamed together.

## Claims

1. A welding method in the manufacture of a spirally wound tube **comprising** the steps of:
winding a thermoplastic hollow profile (1), having a substantially rectangular cross-section, in a screw line form manner on a welding drum (2);
inserting from the outside a welding keel (4) of a welding head (3) coupled to an extruder between two profile surfaces (1a, 1b), which are to be welded together;
blowing hot air (L₁, L₂) out through two pairs of air openings (5, 7) on that side of the welding keel (4) which is turned against the rotational direction of the hollow profile (1) against those portions of said adjacent profile surfaces (1a, 1b), wherein weld seams (F₁, F₂) are to be formed,
arranging a keel nose (9) located between the two pairs of air openings (5, 7) to guide the four hot-air streams (L₁, L₂) and to prevent heating of a middle portion of said profile surfaces (1a, 1b);
pressing out extruded welding mass (S) on each heated edge portion of the profile surfaces (1a, 1b) through two pairs of welding mass openings (6, 8) in a rear section of the welding keel (4), mainly onto a same level as the two pairs of air openings (5, 7);
pressing said welding mass coated hollow profile portions together by means of at least one press roller (10) having an axis radially directed relative to the welding drum (2), such that a double weld seam (F₁, F₂) is formed between adjacent hollow profile windings of the hollow profile (1); and
maintaining a welding pressure on a desired level by regulating friction between the hollow profile (1) and the welding drum (2).

2. A welding method according to Claim 1, **characterized** in that the two pairs of air openings (5 and 7) are coupled to separate, individually adjustable air supply systems provided with their own hot air elements for regulating the temperature and the air flow.

3. A welding method according to Claim 2, **characterized** in that the amount of the welding mass (S) is regulated by means of the extruder and the balancing of the welding mass stream between the two pairs of welding mass openings (6, 8) occurs by means of at least one adjusting screw (13) arranged in the welding head (3).

4. A welding method according to Claim 3, **characterized** in that the width of the applied welding mass strings (17, 18) is defined by a chambering (19, 20) received around each welding mass opening (6, 8) in the welding keel (4).

5. A welding method according to Claim 4, **characterized** in that the friction between the welding drum (2) and the hollow profile (1) is regulated by cooling down the welding drum (2).

6. A welding method according to Claim 4, **characterized** in that the friction between the welding drum (2) and the hollow profile (1) is regulated by varying the diameter of the welding drum (2).

7. A welding head for welding a thermoplastics hollow profile (1) in manufacturing a spirally wound tube, **comprising:**
a welding head (3) which is coupled to an extruder; and
a welding keel (4) insertable into a gap between two adjacent windings of a screw line formed wound hollow profile (1), spirally wound around a welding drum (2), wherein the welding keel (4) has three main zones, i.e. an upper welding zone (4a) with a pair of forward slantingly directed hot air openings (5) on a front edge of the welding keel (4) for blowing out hot air (L₁) against each of profile walls (1a, 1b), which are to be welded together, and a pair of towards both sides directed welding mass openings (6) on a rear edge of the welding keel (4) for applying the welding mass (S) on the profile surfaces (1a, 1b) preheated by the hot-air streams (L₁) for achieving an outer weld seam (F₁); a central shadowing zone (4c) with a directed keel nose (9); and a lower welding zone (4b) having a pair of hot air openings (7) on the front edge of the welding keel (4) and a pair of welding mass openings (8) on the rear edge of the welding keel (4) for achieving an inner weld seam (F₂).

8. A welding head according to Claim 7, **characterized** in that the two pairs of air openings (5, 7) are arranged in a plough-formed bevelled front portion (21, 22) of the corresponding welding zone (4a resp. 4b) as well as a chambering (19, 20) is received around each welding mass opening (6, 8), which chamberings (19, 20) are intended for stating the width of the applied welding mass strings (17, 18).

9. A welding head according to Claim 8, **characterized** in that the two pairs of air openings (5, 7) are connected to separate, individually adjustable air supply systems with their own hot-air elements for regulating the temperature and the air flow.

10. A welding head according to Claim 9, **characterized** in that it has at least one adjusting screw (13) for balancing the welding mass stream (S₁, S₂) to both pairs of welding zones (4a, 4b) of the welding mass openings (6, 8).

## Patentansprüche

1. Schweißverfahren zur Herstellung eines wendelförmig gewickelten Rohres, bei dem folgende Schritte angewandt werden:
das schraubenlinienartige Herumwickeln eines thermoplastischen hohlen Profils (1) mit einem im wesentlichen rechteckigen Querschnitt um eine Schweißtrommel (2);
das Einführen eines Schweißkiels (4) eines Schweißkopfes (3), der mit einem Extruder verbunden ist, von außen zwischen zwei Profiloberflächen (1a, 1b), die verschweißt werden sollen;
das Herausblasen heißer Luft (L₁, L₂) durch zwei Paar Luftöffnungen (5, 7) auf derjenigen Seite des Schweißkiels (4), die gegen die Drehrichtung des hohlen Profils (1) gegen diejenigen Teile der benachbarten Profiloberflächen (1a, 1b) gedreht wird, in denen Schweißnähte (F₁, F₂) ausgebildet werden sollen;
das Anordnen einer Kielnase (9), die zwischen den beiden Paaren von Luftöffnungen (5, 7) liegt, derart, daß sie die vier Heißluftströme (L₁, L₂) leitet und eine Erhitzung eines mittleren Teils der Profiloberflächen (1a, 1b) verhindert;
das Herausdrücken extrodierter Schweißmasse (S) auf jeden erhitzten Randteil der Profiloberflächen (1a, 1b) durch zwei Paar Schweißmasseöffnungen (6, 8) in einem hinteren Abschnitt des Schweißkiels (4) hindurch hauptsächlich in gleicher Höhe wie die beiden Paare von Luftöffnungen (5, 7);
das Zusammendrücken der mit Schweißmasse beschichteten hohlen Profilteile mittels wenigstens einer Druckrolle (10), die eine radial relativ zur Schweißtrommel (2) gerichtete Achse hat, so daß eine doppelte Schweißnaht (F₁, F₂) zwischen benachbarten Hohlprofilwindungen des hohlen Profils (1) ausgebildet wird; und
die Aufrechterhaltung eines Schweißdrucks auf einem gewünschten Wert durch Regelung der Reibung zwischen dem hohlen Profil (1) und der Schweißtrommel (2).

2. Schweißverfahren nach Anspruch 1, dadurch gekennzeichnet, daß die beiden Paare von Luftöffnungen (5 und 7) mit separaten, individuell einstellbaren Luftzuführsystemen verbunden sind, die mit ihren eigenen Heißluftelementen zur Regelung der Temperatur des Luftstroms versehen sind.

3. Schweißverfahren nach Anspruch 2, dadurch gekennzeichnet, daß die Menge der Schweißmasse (S) mittels des Extruders geregelt wird und die gleichmäßige Verteilung des Schweißmassestroms auf die beiden Paare von Schweißmasseöffnungen (6, 8) mittels wenigstens einer Einstellschraube (13) bewirkt wird, die im Schweißkopf (3) angeordnet ist.

4. Schweißverfahren nach Anspruch 3, dadurch gekennzeichnet, daß die Breite der zugeführten Schweißmassestränge (17, 18) durch eine Kammerung (19, 20) bestimmt ist, die um jede Schweißmasseöffnung (6, 8) im Schweißkiel (4) herum aufgenommen ist.

5. Schweißverfahren nach Anspruch 4, dadurch gekennzeichnet, daß die Reibung zwischen der Schweißtrommel (2) und dem hohlen Profil (1) durch Abkühlung der Schweißtrommel (2) geregelt wird.

6. Schweißverfahren nach Anspruch 4, dadurch gekennzeichnet, daß die Reibung zwischen der Schweißtrommel (2) und dem hohlen Profil (1) durch Veränderung des Durchmessers der Schweißtrommel (2) geregelt wird.

7. Schweißkopf zum Schweißen eines thermoplastischen hohlen Profils (1) bei der Herstellung eines wendelförmig gewickelten Rohres, der aufweist:
einen Schweißkopf (3), der mit einem Extruder verbunden ist; und
einen Schweißkiel (4), der in einen Spalt zwischen zwei benachbarten Windungen eines schraubenlinienförmig gewickelten hohlen Profils (1), das wendelförmig um eine Schweißtrommel (2) herumgewickelt ist, einführbar ist, wobei der Schweißkiel (4) drei Hauptzonen aufweist, d.h. eine obere Schweißzone (4a) mit einem Paar schräg nach vorn gerichteter Heißluftöffnungen (5) an einem vorderen Rand des Schweißkiels (4) zum Herausblasen von heißer Luft (L₁) gegen alle Profilwände (1a, 1b), die verschweißt werden sollen, und einem Paar nach beiden Seiten gerichteter Schweißmasseöffnungen (6) an einem hinteren Rand des Schweißkiels (4) zum Aufbringen der Schweißmasse (S) auf den Profiloberflächen (1a, 1b), die durch die Heißluftströme (L₁) vorgewärmt wurden, um eine äußere Schweißnaht (F₁) zu erzielen; einer mittleren Abschirmungszone (4c) mit einer gerichteten Kielnase (9); und einer unteren Schweißzone (4b) mit einem Paar Heißluftöffnungen (7) am vorderen Rand des Schweißkiels (4) und einem Paar Schweißmasseöffnungen (8) am hinteren Rand des Schweißkiels (4) zur Bildung einer inneren Schweißnaht (F₂).

8. Schweißkopf nach Anspruch 7, dadurch gekennzeichnet, daß die beiden Paare von Luftöffnungen (5, 7) in einem pflugartig abgeschrägten vorderen Teil (21, 22) der entsprechenden Schweißzone (4a bzw. 4b) ausgebildet sind sowie eine Kammerung (19, 22) um jede Schweißmasseöffnung (6, 8) herum aufgenommen ist, wobei die Kammerungen (19, 20) dazu dienen, die Breite der zugeführten Schweißmassestränge (17, 18) festzulegen.

9. Schweißkopf nach Anspruch 8, dadurch gekennzeichnet, daß die beiden Paare von Luftöffnungen (5, 7) verbunden sind, um individuell einstellbare Luftzuführsysteme mit ihren eigenen Heißluftelementen zur Regelung der Temperatur und des Luftstroms zu trennen.

10. Schweißkopf nach Anspruch 9, dadurch gekennzeichnet, daß er wenigstens eine Einstellschraube (13) zum Ausgleichen des Schweißmassestroms (S₁, S₂) zu beiden Paaren von Schweißzonen (4a, 4b) der Schweißmasseöffnungen (6, 8) aufweist.

## Revendications

1. Procédé de soudage pour la fabrication d'un tube enroulé en spirale, comprenant les étapes suivantes :
enroulement d'un profilé creux (1) en matière thermoplastique, ayant une section transversale sensiblement rectangulaire, en forme d'hélice sur un tambour de soudage 2 ;
insertion, à partir de l'extérieur, d'une quille de soudage (4) appartenant à une tête de soudage (3) couplée à une extrudeuse, entre deux surfaces (1a, 1b) de profilé qui doivent être soudées ensemble ;
soufflage d'air chaud (L₁, L₂) hors de deux paires d'ouvertures (5, 7) pour air sur le côté de la quille de soudage (4) qui est orienté à l'encontre de la direction de rotation du profilé creux (1), contre les parties desdites surfaces de profilé adjacentes (1a, 1b) dans lesquelles doivent être formés des cordons de soudure (F₁, F₂) ;
agencement d'un nez (9) de quille situé entre les deux paires d'ouvertures pour air (5, 7) destiné à guider les quatre courants d'air chaud (L₁, L₂) et à empêcher le chauffage d'une partie médiane desdites surfaces (1a, 1b) de profilé ;
pression pour faire sortir la masse de soudure (S) extrudée sur chaque partie de bord chauffée des surfaces (1a, 1b) du profilé par deux paires d'ouvertures (6, 8) pour masse de soudure dans une section arrière de la quille de soudage (4), principalement sur le même niveau que les deux paires d'ouvertures pour air (5, 7) ;
pression sur lesdites parties rassemblées de profilé creux revêtues de masse de soudure au moyen d'au moins un rouleau presseur (10) dont l'axe est orienté radialement par rapport au tambour de soudage (2) de façon telle que soit réalisé un double cordon de soudure (F₁, F₂) entre des enroulements adjacents de profilés creux du profilé creux (1) ; et
maintien d'une pression de soudage à un niveau souhaité grâce à un frottement de régulation entre le profilé creux (1) et le tambour de soudage (2).

2. Procédé de soudage selon la revendication 1, caractérisé en ce que les deux paires d'ouvertures pour air (5 et 7) sont couplées à des dispositifs d'alimentation en air séparés , réglables individuellement, dotés de leurs propres éléments d'air chaud en vue de réguler la température et l'écoulement de l'air.

3. Procédé de soudage selon la revendication 2, caractérisé en ce que la quantité de masse de soudure (S) est régulée au moyen de l'extrudeuse et l'équilibre du courant de masse de soudure entre les deux paires d'ouvertures (6, 8) pour masse de soudure, s'effectue au moyen d'au moins une vis de réglage (13) disposée dans la tête de soudage (3).

4. Procédé de soudage selon la revendication 3, caractérisé en ce que la largeur des cordons de masse de soudure (17, 18) appliqués est définie par un chambrage (19, 20) placé autour de chaque ouverture (6, 8) pour masse de soudure de la quille de soudage (4).

5. Procédé de soudage selon la revendication 4, caractérisé en ce que le frottement entre le tambour de soudage (2) et le profilé creux (1) est régulé en refroidissant le tambour de soudage (2).

6. Procédé de soudage selon la revendication 4, caractérisé en ce que le frottement entre le tambour de soudage (2) et le profilé creux (1) est régulé en faisant varier le diamètre du tambour de soudage (2).

7. Tête de soudage destinée au soudage d'un profilé creux thermoplastique (1) pour la fabrication d'un tube enroulé en spirale, comprenant :
une tête de soudage (3) qui est couplée à une extrudeuse ; et
une quille de soudage (4) susceptible d'être insérée dans un intervalle entre deux enroulements adjacents d'un profilé (1) creux enroulé en forme d'hélice, enroulé hélicoïdalement autour d'un tambour de soudage (2), la quille de soudage (4) comportant trois zones principales, c'est-à-dire une zone de soudage supérieure (4a) dotée d'une paire d'ouvertures (5) pour air chaud orientées obliquement vers l'avant sur un bord avant de la quille de soudage (4), destinées à souffler de l'air chaud (L₁) contre chacune des parois (1a, 1b) de profilé qui doivent être soudées ensemble, et une paire d'ouvertures (6) pour masse de soudure orientées des deux côtés, situées sur le bord arrière de la quille de soudage (4), destinées à appliquer la masse de soudure (S) sur les surfaces (1a, 1b) de profilés préchauffées par les courants (L₁) d'air chaud, en vue d'obtenir un cordon (F₁) de soudure extérieur ; une zone centrale (4c) faisant écran comportant un nez (9) de quille orienté ; une zone de soudage inférieure (4b) comportant une paire d'ouvertures (7) pour air chaud sur le bord avant de la quille de soudage (4) et une paire d'ouvertures (8) pour masse de soudure situées sur le bord arrière de la quille de soudage (4), en vue d'obtenir un cordon (F2) de soudure intérieur.

8. Tête de soudage selon la revendication 7, caractérisée en ce que les deux paires d'ouvertures (5, 7) pour air sont disposées dans une partie avant (21, 22) biseautée en forme de soc, de la zone de soudage correspondante (4a, respectivement 4b) ainsi qu'en ce qu'un chambrage (19, 20) est placé autour de chacune des ouvertures (6, 8) pour masse de soudure, lesquels chambrages (19, 20) sont destinés à déterminer la largeur des cordons (17, 18) de masse de soudure qui sont appliqués.

9. Tête de soudage selon la revendication 8, caractérisée en ce que les deux paires d'ouvertures (5, 7) pour air sont reliées à des dispositifs d'alimentation en air séparés, réglables individuellement, comportant leurs propres éléments d'air chaud, destinés à réguler la température et l'écoulement de l'air.

10. Tête de soudage selon la revendication 9, caractérisée en ce qu'elle comporte au moins une vis de réglage (13) destinée à équilibrer les courants (S₁, S₂) de masse de soudure dans les deux paires de zones de soudage (4a, 4b) des ouvertures (6, 8) pour masse de soudure.
